# EUROPEAN PATENT APPLICATION

(11) **EP 2 457 882 A1**
(43) Date of publication of application: **30.05.2012**
(21) Application number: 11190841.4
(22) Date of filing: 25.11.2011
(51) Int. Cl.: C03B 37/01, H01S 3/067, G02B 6/02

(54) **Radiation-insensitive optical fiber doped with rare earths**

(30) Priority: 25.11.2010 FR 1059719
(71) Applicant: Draka Comteq B.V., 1083 HJ Amsterdam (NL)
(72) Inventor: Burov, Ekaterina, 92100 BOULOGNE-BILLANCOURT (FR); Melin, Gilles, 91400 Orsay (FR); Pastouret, Alain, 91300 Massy (FR); Boivin, David, 91160 LONGJUMEAU (FR)
(74) Representative: Algemeen Octrooi- en Merkenbureau

(57) **Abstract**

The invention relates to an optical fiber comprising, from the center toward the periphery:
• a central core (11) adapted to transmit and to amplify an optical signal, the central core (11) consisting of a core matrix comprising nanoparticles, the nanoparticles being formed of a nanoparticle matrix comprising dopants from the rare earths group;
• an optical cladding surrounding the central core (11) adapted to confine the optical signal transmitted by the central core (11), the optical cladding having a plurality of holes (10) that extend along the length of the optical fiber, the holes (10) being separated from each other by a pitch (Λₕₒₗₑ); and
• an outer cladding.

## Description

The present invention relates to the field of optical fibers, and more specifically to radiation-insensitive optical fiber doped with rare earths (e.g. rare earth ions). The present invention also relates to a method of fabricating such an optical fiber.

An optical fiber (i.e., a glass fiber typically surrounded by one or more coating layers) conventionally comprises a central core, the function of which is to transmit and possibly to amplify an optical signal, and optical cladding, the function of which is to confine the optical signal in the central core. To provide this function of guiding the optical signal, the refractive index n_{c} of the central core is typically higher than the refractive index n_{g} of the cladding (i.e. n_{c} > n_{g}).

The refractive index difference between the central core and the cladding is typically obtained by introducing dopants into the central core and/or the cladding.

The central core and the optical cladding are typically obtained by vapor deposition, such as modified chemical vapor deposition (MCVD), outside vapor deposition (OVD), vapor axial deposition (VAD), etc. With an MCVD process, the outer cladding is made by the deposit tube and possibly by overcladding or sleeving. Generally speaking, elements of low volatility such as aluminum or elements from the rare earths group (referred to below as "rare earths," "rare earth dopants," "rare earth ions," or "rare-earth-dopant elements") are incorporated by impregnating a porous layer of silica (SiO₂), which for example, might be obtained during an intermediate step of the MCVD process. Rare earths are impregnated into a deposit using a solution containing rare earths. Such a solution might be obtained from dissolved salts, for example.

Systems employing amplification of the optical signal routinely use optical fibers doped with rare earths. For example, optical fibers doped with erbium are used in erbium-doped fiber amplifiers (EDFAs) to amplify the optical signal transmitted in some long-haul optical telecommunications systems. EDFAs offer high performance in terms of power consumption and optical power conversion efficiency. Optical fibers doped with rare earths typically have a central core formed of a silica matrix containing rare earths, such as erbium at a weight concentration on the order of 250 parts per million (ppm) to 1000 ppm (i.e. 0.025 weight percent to 0.1 weight percent (wt%)).

The gain of an amplying optical fiber is a function of the wavelength of the incident signal. For example, an optical fiber doped with erbium may be used in the C-band (1530 nanometers (nm) - 1565 nm). An optical fiber doped with erbium conventionally has a gain width of approximately 30 nanometer (nm) to 35 nm in band C and a numerical aperture of 0.23. However, when other types of rare earth elements (i.e., rare earth ions) are used,different wavelength ranges may be used.

Wavelength-division multiplex (WDM) applications require high gain width. To this end, rare earths may be associated with complementary dopants that improve amplification. The complementary dopants improve amplification by preventing interaction between the rare earths. To this end, the complementary dopants must surround the rare earths. When doping the optical fiber using a solution containing rare earths, the concentration of complementary dopants is very high in order for each rare earth in the central core to be surrounded by complementary dopants. Aluminum (Al) is one example of a complementary dopant. Aluminum being present as elemental aluminum, viz. being present in the glass network of the fiber core in the form of aluminum oxide

In applications in environments exposed to radiation, such as in nuclear power stations, optical systems have several advantages over electronic systems. Optical fibers have better electromagnetic immunity and better chemical stability. Optical fibers make it possible to obtain more reliable and safe communications systems that require little maintenance. Optical fibers also make it possible to obtain a high data rate. Optical fibers are also very compact, which makes them particularly suitable for uses in systems on-board aircraft and spacecraft.

However, environments exposed to radiation tend to increase the optical fiber's background losses and thus increase attenuation of the transmitted signal.

This increase in background losses may be caused by defects in the structure of the silica in case silica-based optical fibers are used, these defects being created by radiation. Such defects include, for example, dangling bonds and trapped charges, that absorb the optical signal transmitted in the optical fiber at certain wavelengths.

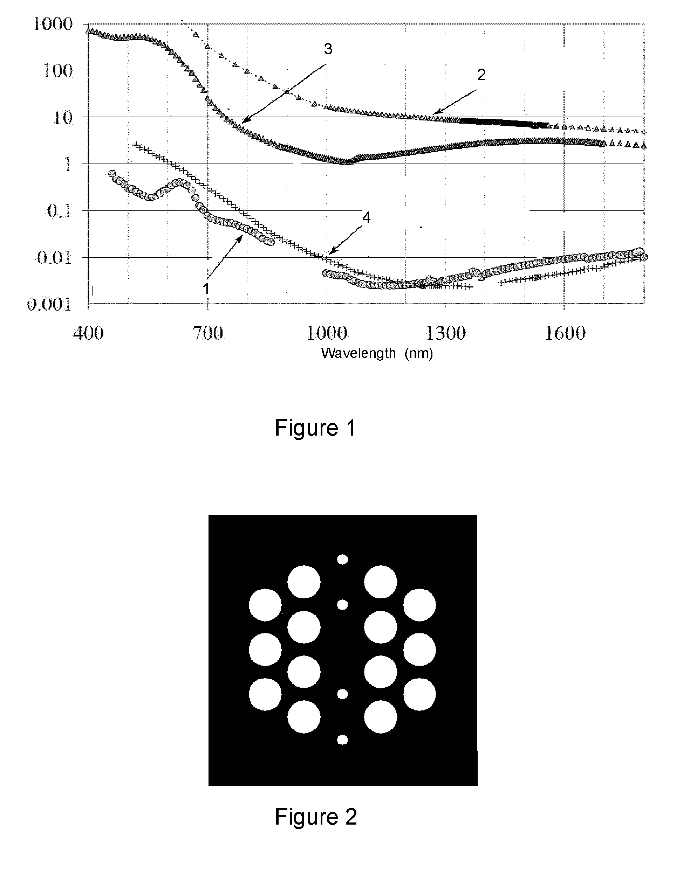

The increase in background losses may also be caused by the creation of specific defects linked to the dopants that are necessary to obtain the properties of optical signal guidance. As mentioned previous dopants are often present in the central core and/or optical cladding to obtain a certain refractive index difference with respect to the outer cladding. This refractive index profile determines the optical properties of the optical fiber. However, the addition of these dopants increases the sensitivity of these optical fibers to radiation. The importance of dopants to the radiation sensitivity of the optical fiber is explained below with reference to Figure 1.

Figure 1 provides attenuation values for the transmitted signal in various examples of optical fibers. The ordinate axis shows the radiation-induced attenuation (RIA) expressed in decibels per kilometer per gray (dB/km/Gy) and is hence normalized to the radiation dose. The abscissa axis shows the wavelength of the transmitted signal expressed in nanometers (nm). The larger the value for RIA the larger the negative effect of radiation on the optical properties of the optical fiber.

Curve 1 was acquired for an optical fiber with a pure silica core (i.e. having no dopants in the core) irradiated at 100 grays (Gy). Curve 2 was acquired from an optical fiber doped with aluminum, with a concentration of aluminum of approximately 7 wt% in the central core, irradiated at 360 Gy. Curve 3 was acquired from an optical fiber doped with phosphorus, with a concentration of phosphorus of approximately 10 wt% in the central core, irradiated at 500 Gy. Curve 4 was acquired from an optical fiber doped with germanium, with a concentration of germanium of approximately 5 wt% in the central core, irradiated at 100 Gy. It can be seen that there is an increase in attenuation up to a wavelength of approximately 1200 nm. This will reduce the optical properties.

The radiation-induced attenuation depends on the wavelength of the transmitted signal and on the radiation-sensitive dopants present in the optical fiber's central core. Different dopants display a different sensitivity to radiation. Thus, the increase in the attenuation of the optical signal in an EDFA depends on the dopants (e.g. germanium, aluminum, phosphorus, or fluorine) that are used to obtain predetermined guidance properties. The increase in signal attenuation also depends on elements introduced because of the fabrication process. For example, chlorine is used to prevent contamination of the materials by hydroxide ions (OH⁻). The increase in attenuation further depends on the complementary dopants used to obtain the required amplification properties. Examples of these complementary dopants include aluminum, phosphorus, antimony, lanthanum, and bismuth.

To reduce the sensitivity of an optical fiber to radiation, the publication by Regnier et al. entitled "Recent developments in optical fibers and how defense, security and sensing can benefit", Proceedings of the SPIE, Vol. 7306, 2009, pp. 73061-730618-10 proposes eliminating the complementary dopants required for the amplification properties by instead employing rare earth doping using silica nanoparticles. The nanoparticles are made of a matrix of silica and rare earths. Moreover, the nanoparticle matrix may contain alumina. The chemical composition of the nanoparticles ensures that the rare earths do not form aggregates. Because the matrix contains no complementary dopants, sensitivity to radiation is reduced. Complementary dopants, however, improve the quality of amplification. Eliminating the complementary dopants precludes high spectral bandwidth applications such as WDM. Furthermore, silica has limited solubility for rare earths, which limits amplification gain. Thus, for doping with erbium, using silica nanoparticles is limited to optical fibers having a weight concentration of erbium of less than 300 ppm.

It is also proposed in the prior art to reduce the length of the optical fiber to reduce the volume of optical fiber exposed to radiation. Such a reduction is obtained in particular by improving amplification gain per unit length of the optical fiber.

The publication by MA et al. entitled "Experimental investigation of radiation effect on erbium-ytterbium co-doped fiber amplifier for space optical communication in low-dose radiation environment", Optics Express, Vol. 17, No. 18, 2009, pages 15571 to 15577 proposes increasing amplification efficiency by doping using a combination of erbium and ytterbium. However, that doping increases the radiation sensitivity of the optical fiber. This increase in radiation sensitivity is caused, in part, by the phosphorus that is necessary for transferring energy from the ytterbium to the erbium and that is present in the composition of the central core matrix. Moreover, the Ma publication's solution is more costly than conventional doping with erbium because it generally includes double-cladding structures suited to high-power applications.

The publication by Gusarov et al. entitled "Radiation sensitivity of EDFAs based on highly doped fibers", Journal of Lightwave Technology, Vol. 27, No. 11, 2009, pp. 1540 to 1545 proposes increasing amplification efficiency by increasing the quantity of rare earths present in the optical fiber. However, if the concentration of rare earths in the central core of the optical fiber is high, pairs or even aggregates of rare earths are observed to form in the central core matrix, which leads to non-uniform doping. Such non-uniform doping reduces the amplification efficiency of the optical fiber because of the simultaneous existence of non-radiating mechanisms, such as quenching between the rare earths. Such processes of cooperation between rare earths include, for example, homogeneous up-conversion (HUC) and pair-induced quenching (PIQ). These mechanisms interfere with the stimulated emission of radiation producing the amplification. For example, in an optical fiber having a silica central core with an aluminum concentration of approximately 7 wt%, the quenching phenomenon becomes important for an erbium weight concentration of 700 ppm. These unwanted transfers of energy compete with the emission stimulated by the pump beam, thereby limiting the amplification efficiency of the optical fiber.

Such aggregates of rare earths may also accentuate photonic degradation, such as photodarkening. Photonic degradation may occur during the propagation of high-power light signals in the optical fiber's central core of the because of highly absorbent defects present in the matrix of the central core.

To circumvent these aggregates, the Gusarov publication increases the quantity of complementary dopants. The reduction of the volume of optical fiber exposed to radiation may thus be rendered ineffective by this increase in the quantity of radiation-sensitive elements.

Erbium-doped amplifier optical fibers may employ holey claddings that facilitate a reduction in the length of the optical fiber while retaining a high amplification gain. Holey claddings are known, for example, from the publication by Knight et al. entitled "All silica single-mode optical fiber with photonic crystal cladding", Optics Letters, Vol. 21, 1996, pp. 1547 to 1549. Optical fibers comprising a holey cladding are referred to as photonic crystal optical fibers, holey optical fibers, microstructured optical fibers, or photonic crystal fibers (PCF). Holey optical fibers formed from multilayer film and known as Bragg fibers are known in the art, for example. Furthermore, some holey optical fibers confine transmitted signals using the forbidden energy band.

Photonic crystal fibers provide guidance by internal reflection via an array of air holes in the optical fiber's optical cladding. The optical fiber's central core can then be formed of pure silica (i.e. silica containing no dopants). The cladding is formed of pure silica with air holes, so it is no longer necessary to use dopants to obtain guidance properties.

For example, the publication by Cucinotta et al. entitled "Design of erbium-doped triangular photonic-cristal fiber based amplifiers", IEEE Photonics Technology Letters, Vol. 16, No. 9, 2004, pp. 2027 to 2029, and the publication by K. Furusawa et al. entitled "High gain efficiency amplifier based on an erbium doped alumino-silicate holey fiber", Optics Express, Vol. 12, No. 15, 2004, pp. 3452 to 3458, propose an optical fiber doped with erbium and having a holey cladding. The holey cladding makes it possible to improve the amplification properties of those amplifier optical fibers. This amplification improvement primarily because of the theoretical improvement of the overlap between the section doped with rare earths and both the pump and the signal beams. However, the Cucinotta and Furusawa publications are not concerned with the radiation sensitivity of the optical fibers.

Optical fibers comprising a holey cladding are described in the publication by Hilaire et al. entitled "Numerical study of single mode Er-doped microstructured fibers: influence of geometrical parameters on amplifier performance", Optics Express, Vol. 14, 2006, pp. 10865 to 10877. In the Hilaire publication, the reduction in the length of optical fiber relative to a standard erbium-doped optical fiber is as high as 40 %, while retaining the same gain curve. The profile of the optical fiber is optimized to obtain a 90% overlap that varies little with wavelength. However, the Hilaire publication is not concerned with the sensitivity of the optical fiber to radiation.

The publication by S. Girard et al. entitled "Gamma-radiation induced attenuation in PCF", Electronic Letters, Vol. 38, No. 20, 2002, pp. 1169 to 1171, indicates that the radiation sensitivity of photonic crystal fibers depends strongly on the purity of the silica used to produce the core. It is also known, for example, from the publication by S. Girard et al. entitled "Radiation-induced defects in fluorine-doped silica-based optical fibers: Influence of pre-loading with H2", Journal of Non-Crystalline Solids, 355, 2009, pp. 1089 to 1091, that the chlorine in the silica induces high absorption under radiation, particularly at short wavelengths. However, those Girard publications, however, fail to describe amplifier optical fibers doped with rare earths. In particular, they do not deal with the problem of the spectral bandwidth of an amplifier optical fiber.

There is therefore a need for an optical fiber doped with rare earths that has low sensitivity to radiation and non-degraded amplification properties.

To this end, the present invention provides an optical fiber comprising, from the center towards the periphery:
- a central core adapted to transmit and to amplify an optical signal, the central core consisting of a core matrix comprising nanoparticles, the nanoparticles being formed of a nanoparticle matrix comprising dopants from the group of rare earths ions;
- an optical cladding surrounding the central core and adapted to confine the optical signal transmitted by the central core, the optical cladding having a plurality of holes that extend along the length of the optical fiber, the holes being separated by a pitch; and
- an outer cladding.

In other words, the present invention relates to an optical fiber comprising, from the center toward the periphery: a central core adapted to transmit and to amplify an optical signal, the central core consisting of a core matrix comprising nanoparticles, the nanoparticles being formed of a nanoparticle matrix comprising dopants from the rare earths group; an optical cladding surrounding the central core adapted to confine the optical signal transmitted by the central core, the optical cladding having a plurality of holes that extend along the length of the optical fiber, the holes being separated from each other by a pitch; and an outer cladding.

In an embodiment, the pitch constant for each hole to ease the fiber fabrication process.

In the present invention, with complementary dopant is meant a dopant element that is present within the nanoparticle matrix and that surrounds the rare earth element These complementary dopants may be, for example, aluminum, phosphorus, antimony, lanthanum, or bismuth or one or more combinations thereof.

In another mbodiment, the core matrix does not include an additional dopant that is typically used to achieve a particular refractive index difference (e.g., germanium, fluorine, aluminum, and/or phosphorous).

In one embodiment, the optical cladding has a chlorine weight concentration of less than 500 ppm and contains no other chemical elements (impurities) having a weight concentration greater than one part per billion.

In one embodiment, the optical cladding has a chlorine weight concentration of less than 100 ppm and contains no other chemical elements having a weight concentration greater than one part per billion.

In one embodiment, the optical cladding is made of pure silica.

In one embodiment, the holes and the central core have only a symmety of rotation of order about the center of the optical fiber. This means that, by rotating the pattern by an angle π around the center, the same structure is recovered. In that case, the core exhibits a size, which is different in two main orthogonal directions, defining therefore a fast and a slow axis and leading to a polarization maintaining fiber (as a example, a triangular lattice based design in which 2 opposite holes in regard to the core, and belonging to the 6 ones of the first row closed to the core, have the same different size as compared to all the other holes).

In one embodiment, the holes are separated by a pitch between 2 micrometers (µm) to 10 µm.

In one embodiment, the holes have a cross-section that is substantially circular and each hole has a diameter such that the ratio of the diameter to the pitch is in the range 0.3 to 0.9.

In one embodiment, the core matrix is made of silica, preferably pure silica.

In one embodiment, the central core has a weight concentration in dopants from the rare earths group in the range 200 ppm to 1000 ppm and a nanoparticle matrix concentration in the range 0.5 wt% to 5 wt%.

In one embodiment, the nanoparticles present an atomic ratio of the nanoparticle matrix to the dopants from the rare earths group in the range 10 to 500, preferably in the range 50 to 350.

In one embodiment, the nanoparticle matrix is a material selected from alumina (i.e. aluminum oxide or Al₂O₃) and/or silica.

In one embodiment, the dopants from the rare earths group are selected from erbium, ytterbium, thulium, and one or more combinations thereof.

The present invention also provides an optical amplifier including at least one portion of optical fiber according to the present invention and using a pump power in the range 150 milliwatts (mW) to 1.5 watts (W).

In one embodiment, the optical amplifier has a bandwidth in the range 25 nm to 32 nm in the C band (i.e. from 1530 nm to 1560 nm).

The present invention also provides an optical fiber laser including at least one portion of optical fiber according to the present invention.

The present invention also provides a method of fabricating an primary optical preform, including steps of:
- forming a part (also called core) of the preform including nanoparticles doped with elements from the rare earths group, said preform core (i.e. the core of the preform) contributing to forming the optical fiber's central core;
- fabricating a plurality of capillaries; and
- arranging the capillaries in a bundle of capillaries including said preform core at its center.

In other words, the invention relates to a method of fabricating an optical fiber primary preform, including steps consisting in: forming a part of the preform including nanoparticles doped with elements from the rare earths group, said part of the preform contributing to forming the central core of the optical fiber; fabricating a plurality of capillaries; and arranging the capillaries in a bundle of capillaries including said part of the preform at its center.

In one embodiment, said core of the preform contributing to forming the optical fiber's central core is produced in a material based on pure silica.

In one embodiment, the capillaries have a chlorine weight concentration of less than 500 ppm and contain no other chemical elements (i.e. impurities) having a weight concentration greater than one part per billion.

In one embodiment, the capillaries have a chlorine weight concentration of less than 100 ppm and contain no other chemical elements having a weight concentration greater than one part per billion.

In one embodiment, the capillaries are formed of pure silica.

In one embodiment, the forming step includes steps of:
- effecting a porous deposit on the inside surface of a tube, said deposit having a tubular shape;
- impregnating said porous deposit with a suspension of nanoparticles doped with elements from the rare earths group;
- vitrifying said impregnated deposit; (since the porous deposit has been impregnated it is considered to be an impregnated deposit) · collapsing the combination of the tube and the deposit; and
- extracting said collapsed, impregnated deposit, said deposit constituting said part of the preform contributing to the formation of the optical fiber's central core.

In other words, the impregnated porous deposit is vitrified. The tube and vitrified, impregnated porous deposit are collapsed. The collapsed, vitrified, impregnated porous deposit is then extracted from the tube and is used to form the preform core.

In one embodiment, the deposition step is performed via a modified chemical vapor deposition technique.

In one embodiment, the forming step includes steps of:
- forming a rod comprising nanoparticles doped with elements from the rare earths group;
- vitrifying the rod; and
- collapsing the rod, said rod constituting said preform core contributing to the formation of the optical fiber's central core.

In one embodiment, the rod is produced via a sol-gel process.

In one embodiment, the step of fabricating the plurality of capillaries includes steps of:
- effecting a deposit on the inside surface of a tube, said deposit having a tubular shape;
- extracting the tubular deposit;
- drawing the capillaries from the tubular deposit.

In one embodiment, the step of fabricating the plurality of capillaries includes steps of:
- effecting a deposit on the inside surface of a tube, said deposit having a tubular shape; and
- drawing the capillaries from the tube having the deposit on its inside surface.

In one embodiment, the step of effecting a deposit is carried out via a plasma chemical vapor deposition technique.

In one embodiment, the concentration of nanoparticles in the core of the preform is in the range 10¹⁶ per cubic centimeter (cm³) to 10¹⁸/cm³.

In one embodiment, the nanoparticles have a substantially spherical shape and a diameter in the range 5 nm to 25 nm.

In an optical fiber according to the present invention, doping with rare earths is carried out using nanoparticles comprising rare earths. Doping with nanoparticles makes it possible to limit or even to eliminate the use of complementary dopants that are sensitive to radiation.

The optical fiber according to the present invention also includes optical cladding with holes in it, also known as a holey cladding. The holes in the optical cladding make it possible to provide the guidance properties of the optical fiber without using radiation-sensitive dopants. Furthermore, the holes make it possible to reduce the length of optical fiber by increasing conversion efficiency. This reduces the length of optical fiber exposed to radiation.

The optical fiber according to the present invention is thus highly insensitive to radiation. The characteristics of the optical fiber make it possible to obtain optimized radiation and amplification properties.

Other features and advantages of the present invention become apparent on reading the following description of particular embodiments of the present invention given by way of non-limiting example and with reference to the appended drawings in which:
- Figure 1, already described, shows the radiation-induced attenuation in an optical fiber as a function of the dopants present in the optical fiber and the wavelength of the signal transmitted by the optical fiber;
- Figure 2 shows one example of an optical fiber according to the present invention;
- Figure 3 shows another example of an optical fiber according to the present invention;
- Figure 4 shows a further example of an optical fiber according to the present invention;
- Figure 5 illustrates the steps of a method of the invention;
- Figure 6 illustrates the steps of a method of one particular embodiment of the present invention;
- Figure 7 illustrates the steps of a method of one particular embodiment of the present invention; and
- Figure 8 shows a sectional view of an optical fiber of one particular embodiment of the invention.

### DETAILED DESCRIPTION OF THE INVENTION

In embodiments of optical fibers according the present invention, the optical fiber is doped with rare earths by using nanoparticles containing rare earth dopants. Doping with nanoparticles typically makes it possible to limit or even eliminate the use of complementary dopants that are sensitive to radiation. Embodiments of optical fibers also include an optical cladding with holes in it, also known as a holey cladding. The holes in the optical cladding make it possible to provide the guidance properties of the optical fiber without using radiation-sensitive dopants. Furthermore, the holes make it possible to reduce the length of optical fiber by increasing conversion efficiency. This reduces the length of optical fiber exposed to radiation. The optical fiber according to the present invention is thus highly insensitive to radiation. The characteristics of the optical fiber make it possible to obtain desirable radiation and amplification properties.

The optical fiber conforming to the present invention is described with reference to Figures 2, 3, 4, and 8, which are sectional views of examples of optical fibers according to the present invention. These figures depict each optical fiber in a plane perpendicular to its axis.

The optical cladding is produced in a material adapted to transmit an optical signal, such as silica.

The optical cladding includes holes 10 that extend along the length of the optical fiber. In other words, the holes 10 extend in a direction parallel to the axis of the optical fiber. The holes 10 form a regular array of holes in which the axes of two adjacent holes are spaced at a pitch Λₕₒₗₑ.

In a transverse plane perpendicular to the axis of the optical fiber the sections of the holes 10 are organized in the form of a triangular periodic array. The periodic array is obtained from the repetition of a pattern of three holes whose centers form an equilateral triangle, except for a central area occupied by the core 11 of the optical fiber, where a hole is removed.

Also, in the practical realization of the structure, the holes 10 are arranged in concentric rings of holes. The term ring is to be understood here in the broadest sense, particularly including a substantially hexagonal shape as shown in Figures 2, 3, 4, and 8.

The examples shown in Figures 2, 3, 4, and 8 are not limiting on the invention. In particular, the holes 10 may be arranged in a different periodic array. The concentric rings may have a geometrical shape other than a hexagonal shape.

The holes 10 are filled with a gas, such as air or carbon dioxide (CO₂). The medium inside the holes 10 is different from the material between the holes 10. Thus the medium inside the holes 10 and the material around the holes 10 have different refractive indices. The number and volume of the holes 10 make it possible to adjust the refractive index of the optical cladding. Thus the number and volume of the holes 10 make it possible to adjust the optical fiber's numerical aperture and the difference between the index of the optical fiber's central core 11 and that of the optical cladding.

Thus, the holes 10 within the optical cladding make it possible to obtain a difference between the index of the central core 11 and the index of the optical cladding without using dopants. The optical signal is confined in the central core 11 without the presence of dopants. This reduces the quantity of dopants that are sensitive to radiation.

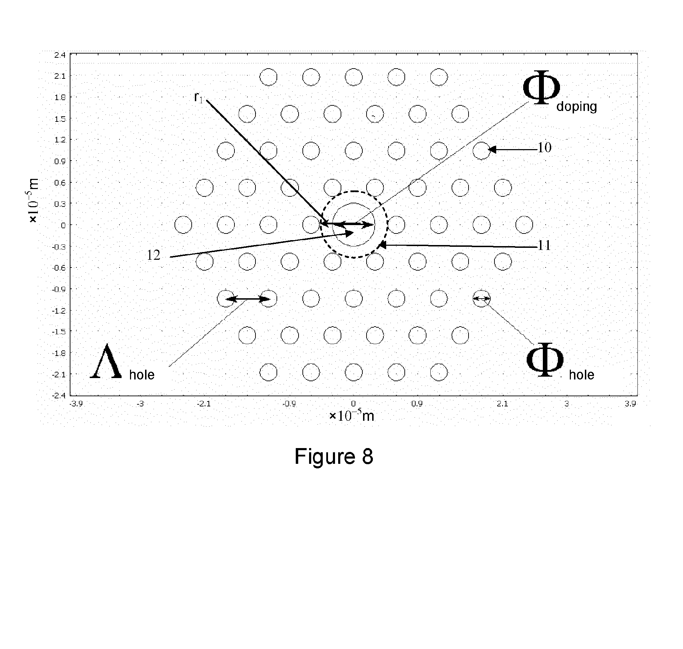

For example, in the particular embodiment shown in Figure 8, the holes 10 have a cross-section that is circular with a diameter Φₕₒₗₑ. The pitch Λₕₒₗₑ is in the range 2 µm to 10 µm. The ratio Φₕₒₗₑ/Λₕₒₗₑ is in the range 0.3 to 0.9. The optical cladding has between two and six concentric hexagonal rings of holes.

The holes 10 may vary because of uncertainties of the optical fiber fabrication process. For example, the holes 10 have a tolerance of 20 % (e.g. 10 % or less, or 5 % or less) with respect to the values of the pitch Λₕₒₗₑ and the diameter Φₕₒₗₑ. Accordingly, nominal values for the pitch and diamter herein include a 20-percent tolerance. It is practical to target the same pitch (same external capillaries diameter) in order to get a triangular lattice and an easy assembling, but it is possible to target different hole diameters by changing the inter capillaries diameter (from row to row for example). But the most preferred solution with respect to easy of preparation is to target same pitch and same hole diameter.

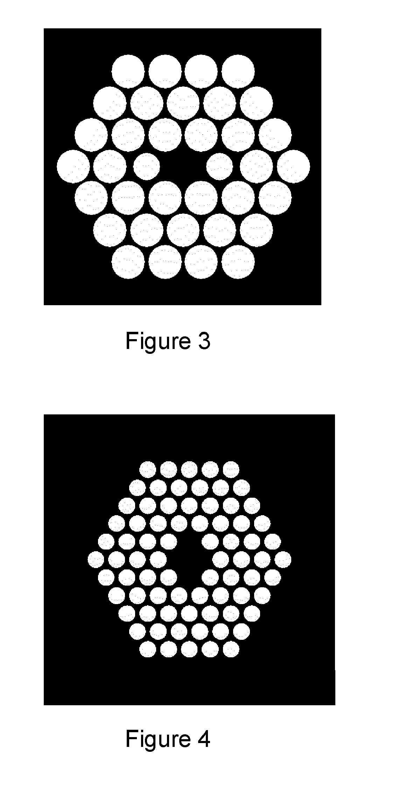

In other embodiments, the holes 10 have a circular cross-section and different diameters Φₕₒₗₑ. In the particular example shown in Figure 2, holes with their center situated on a straight line passing through the center of the optical fiber have a diameter less than that of the other holes in the optical cladding. In another particular example shown in Figure 3, diametrically-opposite holes in the first ring have a diameter less than that of the other holes.

As compared to standard dopant-based step index cladding technology, the holes 10 in the optical cladding make it possible to improve the overlap between the area 12 doped with rare earths and the pump optical beam and/or the overlap between the area 12 doped with rare earths and the signal optical beam, as compared to the standard step index technology, where the core presents a higher index as compared to the cladding (without any holes). This improvement in the overlap between the area 12 doped with rare earths and the pump and/or the signal makes it possible to optimize the length of the optical fiber. For the same concentration of rare earths and for pump and signal beams having respective wavelengths of 980 nm and 1550 nm the optical fiber according to the present invention has a length reduced by in the range 20% to 50% compared with a prior art optical fiber in which the index difference between the central core 11 and the optical cladding is obtained with dopants. In other words, the optical fiber's amplification gain per unit length is greated that typical prior art optical fibers. Thus, a shorter length (e.g. up to between 20 and 50 percent less) of optical fiber of the present invention is exposed to radiation that the exposed length of a prior art optical fiber.

The number and volume of the holes 10 furthermore determine other optical properties of the optical fiber. The pitch Λₕₒₗₑ has a value that achieves a compromise between the optical fiber's effective area and the optical fiber's bending losses. In this example, where the holes 10 have a circular cross-section and a diameter Φₕₒₗₑ, the pitch Λₕₒₗₑ and the ratio Φₕₒₗₑ/Λₕₒₗₑ further stabilize the single-mode behavior of the optical fiber for wavelengths used in the optical fiber (e.g. in amplification). Thus, the pitch Λₕₒₗₑ and the ratio Φₕₒₗₑ/Λₕₒₗₑ ensure that the optical fiber's cut-off wavelength λ_{c} is less than the pump wavelength (980 nm or 1480 nm for erbium).

The optical cladding has been described with holes 10 of circular cross-section, but the present invention is not so limited. In particular, the holes 10 may have a crosssectional shape other than circular (e.g., a circle elongated in one direction as compared to perfect circle (pearl shape) or elliptical shape).

The central core 11 is the optical fiber portion situated at the center of the optical fiber and surrounded by the optical cladding. In a plane perpendicular to the axis of the optical fiber, the central core 11 is the area within a circle that is tangential to the first ring of holes 10 from the center of the optical fiber.

In one embodiment, the central core 11 occupies a single point of the periodic array of points described above situated at the center of the optical fiber.

In one example of this embodiment (shown in Figure 8) in which the holes 10 have a circular cross-section and a diameter Φₕₒₗₑ, the central core 11 has a circular section having a diameter 2r₁ equal to 2 × Λₕₒₗₑ - Φₕₒₗₑ. Substituting this equation into the spatial relationships depicted in Figure 8 yields the following equality: Λₕₒₗₑ = Φ_{doping}; meaning that the diameter of the capillary tubes equals the diameter of the doped preform part, which would simplify manufacturing and ensure constant pitch within the holey cladding. Thus, in some embodiments, the doped prefor core is manufactured to have the largest possible diameter without disrupting pitch uniformity.

In other examples of this embodiment shown in Figures 2 and 3, in which the holes 10 of the first ring have different diameters, the core 11 has a cross-section of elliptical shape.

A further embodiment of the central core 11 includes the point of the array situated at the center of the optical fiber and one or more other points of the array. Figure 4 shows one example of this embodiment. The central core 11 has a cross-section having substantially the shape of a quadrilateral.

The central core 11 comprises a core matrix and nanoparticles. The core matrix surrounds the nanoparticles, which are doped with rare earths. The core matrix contributes to guiding the optical signal in the central core 11.

The core matrix contains no dopants. In particular, the core matrix contains no dopants for obtaining an index difference between the central core 11 and the optical cladding. Thus, the core matrix does not contain dopants causing radiation-induced attenuation of the signal.

The core matrix 11 has a chlorine weight concentration of less than 1000 ppm. Chlorine is typically used (for example in a material such as pure silica) to prevent contamination by hydroxide ions (OH⁻). However, chlorine causes high radiation-induced adsorption in the range of visible wavelengths. Minimizing the quantity of chlorine in the optical fiber improves the optical fiber's resistance to radiation. Chlorine may also be present in the core matrix 11 as a residue from the raw materials (e.g., silicon tetrachloride) used in manufacturing.

The core matrix 11 contains no other chemical elements (such as metallic impurities or cations) detectable by standard chemical analysis. The plasma torch or inductively coupled plasma (ICP) technique is one example of a chemical analysis technique. For example, the core matrix 11 contains no other chemical elements having a weight concentration greater than one part per billion (ppb) in particular metallic impurities or cations. In other words, in the core matrix, the weight concentration of chemical elements other than chlorine is less than one part per billion. The total of all non-chlorine contaminants or impurities does hence not exceed one part per billion.

Thus, the matrix of the central core 11 contains a limited quantity of chemical elements that could attenuate the signal transmitted by the optical fiber. In the core matrix the radiation-induced attenuation of the signal is minimized. The core matrix contains no chemical elements inducing radiation losses greater than 0.05 decibels per meter per kilogray (dB/m/kGy) in a usable range of wavelengths. In this regards, usable range of wavelengths refers to a range of wavelengths including the wavelength of the signal transmitted by the optical fiber. For erbium, for example, the usable range of wavelengths is from 900 nm to 1600 nm.

The core matrix is, for example, a vitreous matrix consisting mostly of silica. The core matrix 11 is, for example, pure silica (e.g. silica containing no dopants).

The central core 11 further contains nanoparticles. The nanoparticles are surrounded by the core matrix. The doping of the central core 11 with rare earths is achieved via the nanoparticles.

The nanoparticles are contained within a central area 12 of the central core 11 having a substantially circular cross-section with diameter Φ_{doping}. The diameter Φ_{doping} of the doped area 12 is typically in the range 2 µm to 10 µm. The diameter Φ_{doping} has a maximum value that makes it possible to preserve the constraints applying to the ratio Φₕₒₗₑ/Λₕₒₗₑ, particularly during optical-fiber fabrication.

The nanoparticles are formed from a matrix and embedded rare earths. The nanoparticle matrix surrounds the rare earths.The composition and structure of the nanoparticle matrix are favorable to the solubility of the rare earths. This nanoparticle matrix is independent of the composition of the optical fiber's core matrix 11. For example, the nanoparticle matrix is typically silica or alumina, or a combination thereof.

The rare earths make it possible to amplify the signal transmitted by the central core 11. In the optical fiber, the rare earths take the ionized form of the same chemical element from the rare earths group. The rare earth is for example erbium (Er), ytterbium (Yb), thulium (Tm) or a combination thereof, or any other rare earth that makes possible amplification by optical pumping. For example, the rare earth is erbium for amplification in the C band.

Doping via nanoparticles makes it possible to avoid aggregation of the rare earths. It is therefore not necessary to saturate the central core 11 with complementary dopants to prevent aggregation of the rare earths. Thus the amplification properties are preserved at the same time as reducing the quantity of radiation-sensitive elements in the central core 11.

For example, the doped area 12 of the central core 11 has a weight concentration of rare earths in the range 200 and 1000 ppm inclusive and a nanoparticle matrix concentration between 0.5 wt% to 5 wt%, preferably in the range 1.5 wt% to 4 wt%.

For example, the nanoparticles have an atomic ratio of nanoparticle matrix to rare earths that is between 10 and 500, preferably in the range 50 to 350, more preferably in the range 50 to 200.

The optical fiber also has a typical outer cladding. For example, the outer cladding is typically natural silica for reasons of cost. In another example, the exterior optical cladding is in doped silica.

For the same amplification performance, the optical fiber according to the present invention is 2 to 100 times, typically 10 to 1000 times, more resistant to radiation than a typical prior art optical fiber, depending on the radiation conditions and the optical fiber operating conditions. Thus, in the usable wavelenght range, the optical fiber according to the present invention has a radiation-induced attenuation in the range 0.005 dB/m/kGy to 0.05 dB/m/kGy.

Moreover, because of the small quantity of complementary dopants used, or even the absence of complementary dopants, the optical fiber according to the present invention has low background losses before irradiation. Thus in the wavelength range 1000 nm to 1200 nm the background losses before irradiation are typically less than 5 decibels per kilometer (dB/km), or even less than 2 dB/km.

The optical fiber according to the present invention is usable in low-bandwidth applications such as single-channel applications and in wide-bandwidth applications such as wavelength-division multiplex applications, as a function of the quantity of complementary dopants contained in the optical fiber, while remaining sufficiently insensitive to radiation.

In one embodiment, the nanoparticle matrix contains no complementary dopants. For example the nanoparticle matrix is silica. The weight concentration of rare earths in the nanoparticles is in the range 150 ppm to 250 ppm. The optical fiber has a radiation-induced attenuation in the range 0.005 dB/m/kGy to 0.05 dB/m/kGy.

In one embodiment, the nanoparticle matrix contains complementary dopants that improve the dissolution of the rare earths at high concentrations, improve the gain properties of the optical fiber and maintain a physical barrier between the rare earths. The complementary dopants make it possible to obtain a wide bandwidth without sacrificing radiation resistance.

In an example of this embodiment, the nanoparticle matrix is an oxide such as alumina that facilitates the achievement of a good distribution of the rare earths in the nanoparticle and makes it possible to widen the spectral window to provide amplification gain for wavelength-division multiplex applications.

In this example, the core 11 has a weight concentration of rare earths in the range 200 ppm to 400 ppm and a concentration of complementary dopants in the range 2.5 wt% to 3.5 wt%. This facilitates the achievement of relatively wide bandwidth and low erbium-induced attenuation, which is proportional to the quantity of erbium present in the optical fiber. Accordingly, in the situation of doping with erbium, the optical fiber has an attenuation per unit length linked to the erbium in the range of 3 decibels per meter (dB.m⁻¹) to 6 dB.m⁻¹ at the wavelength of 1530 nm and a bandwidth in the range 25 nm to 32 nm.

The optical cladding, which includes the holes 10, transmits part of the fundamental optical mode and may interfere with the signal transmitted by the central core 11. The contribution of the optical cladding to the transmitted signal decreases rapidly with the radius of the optical fiber. In practice, the portion comprising the first ring of holes 10 around the central core 11 contributes mainly to transporting the optical signal. In the embodiment depicted in Figure 8, the area that is likely to interfere with the transmitted signal is an annular area between the radii 0.5 Λₕₒₗₑ and 1.5 Λₕₒₗₑ.

In one embodiment, the optical cladding has a chlorine weight concentration of less than 500 ppm, preferably less than 100 ppm. The optical cladding furthermore contains no other chemical elements detectable by standard chemical analysis means. The plasma torch or inductively coupled plasma (ICP) technique is one example of a chemical analysis technique. For example, the optical cladding contains no other chemical elements having a weight concentration higher than one part per billion. In other words, the weight concentration in chemical elements other than chlorine in the optical cladding is less than one part per billion. Thus ,the optical cladding contains a limited quantity of radiation-sensitive chemical elements or impurities that could attenuate the signal transmitted by the central core 11.

Thus, radiation-induced attenuation of the signal by the optical cladding is minimized. The optical cladding contains no chemical elements inducing radiation losses greater than 0.05 decibels per meter per gray (dB/m/Gy).

In one embodiment, the area 12 doped with rare earths of diameter Φ_{doping} does not cover the whole of the central core 11. In this embodiment, as compared to standard dopant-based step-index cladding technology, only the overlap between the central core 11 and the pump optical beam or the overlap between the central core 11 and the signal optical beam is improved, as compared to the standard step index technology, where the core presents a higher index as compared to the cladding (without any holes). The overlap is in the range 0.6 to 0.7, for example.

In exemplary embodiments, the central core 11 and the holes 10 have a symmetry of rotation only of order π about the center of the optical fiber. Thus, rotating the optical fiber's cross-section by an angle of π around the optical fiber's central longitudinal axis results in the same cross-section. Accordingly, the central core area has a size that is different in two main orthogonal directions, thereby defining a fast axis and a slow axis generating a polarization maintaining optical fiber. For example, a triangular lattice based design in which two opposite holes in regard to the core, and belonging to the six holes of the first ring close to the core, have different size as compared to all the other holes would exhibit a symmetry of rotation of order π about the center of the optical fiber. Such rotation symmetry of order π makes it possible to preserve the polarization of the signal transmitted in the optical fiber.

Thus, in such an embodiment of the optical fiber of the present invention, the optical cladding makes it possible to obtain a polarization-maintaining optical fiber without using additional dopants such as boron.

Typically, in an optical fiber in which the index difference between the central core and the optical cladding is obtained with dopants, the polarization of the transmitted signal is maintained by inserting rods of silica doped with boron into the optical cladding on either side of the central core.

Figures 2 to 4 show examples of optical fibers in which the holes 10 and the central core 11 have only rotation symmetries of order π. The Figure 8 optical fiber example exhibits a symmetry of order π/3. The Figure 8 optical fiber example therefore does not have only a symmetry of order π and is not a polarization-maintaining optical fiber.

The advantages of the optical fiber according to the present invention are explained below with reference to the (comparative) examples I, II, III, and IV of amplifier optical fibers set out in Tables 1 and 2.

Examples I and III are comparative optical fibers in which the refractive index difference between the central core and the optical cladding is obtained with dopants such as germanium and/or fluorine. The doping of the central core with rare earths is obtained without using nanoparticles by impregnation with a solution containing rare earths.

The optical fiber examples II and IV are optical fibers according to the present invention. The signal is confined in the central core 11 with the aid of the holes 10 in the optical cladding. In particular, in the optical fibers II and IV the holes 10 are organized in a triangular array. The optical fibers II and IV are furthermore doped with erbium using nanoparticles.

Table 1 gives the optical fiber examples I, II usable in a narrow-bandwidth application such as a single-channel application.

**Table 1**

| **Fiber I** | | **Fiber II** | |
|---|---|---|---|
| λ_{c} | 960 nm | λ_{c} | < 960 nm |
| 2r₁ | 25 µm | Pitch Λₕₒₗₑ | 60 µm |
| Δn | 30.10⁻³ | Φₕₒₗₑ | 24 µm |
| | | Φₕₒₗₑ/Λₕₒₗₑ | 04 |
| [Er] | 16×10²⁴ ions/m³ | [Er] | 16×10²⁴ ions/m³ |
| | | 2r₁ | 60 µm |
| ₁₅₃₀[Er] | 3 dB m⁻¹ | α₁₅₃₀[Er] | 4 dB m⁻¹ |
| | | Δn doping | 0 |
| [Al] | ~ 03 wt% | [Al] | 0 |
| [Ge] | ~ 30 wt% | [Ge] | 0 |
| Γ₉₈₀ nm | 0 82 | Γ₉₈₀ nm | 0 68 |
| Γ₁₅₅₀ nm | 0.53 | Γ₁₅₅₀ nm | 0.66 |
| Optical fiber length | 30 m | Optical fiber length | 23 m |

For each optical fiber, Table 1 gives the cut-off wavelength λ_{c}, the concentration of erbium [Er] in the central core, the diameter 2r₁ of the central core, the aluminum concentration (elemental) [Al], the germanium concentration [Ge], the overlaps Γ_{980 nm} and Γ_{1550 nm} between the doped section and respectively the pump beam of wavelength 980 nm and the signal beam of wavelength 1550 nm, and the length of the amplifying optical fiber.

Table 1 also gives the attenuation per meter α₁₅₃₀[Er] resulting from the incorporation of the erbium measured at the wavelength 1530 nm. This attenuation is different from the radiation-induced attenuation. The attenuation per unit length α₁₅₃₀[Er] depends on the concentration in erbium and the profile of the optical fiber.

For the optical fiber I, Table 1 also gives the index difference Δn between the central core and the optical cladding.

For the optical fiber II, Table 1 also gives the pitch Λₕₒₗₑ between the holes 10 in the optical cladding, the diameter Φₕₒₗₑ of the holes 10, the ratio Φₕₒₗₑ/Λₕₒₗₑ between the diameter Φₕₒₗₑ and the pitch Λₕₒₗₑ, and the index difference Δn_{doping} caused by the complementary dopants inserted into the central core.

In the optical fiber 1, the signal is confined in the central core 11 by doping the central core 11 with germanium, which contributes to the index difference Δn of the core.

In the optical fiber II, the nanoparticles consist of a matrix of silica (SiO₂) and erbium. Doping via nanoparticles makes it possible to avoid the use of aluminum to prevent aggregation of the rare earths. The doped area 12 thus contains no dopants that influence the index difference. The index difference Δn_{doping} is therefore zero. The pitch Λₕₒₗₑ between the holes 10 of the cladding is 6 µm. This pitch Λₕₒₗₑ makes it possible to compromise between the effective area of the optical fiber, the overlap between the doped area 12 and the signal and pump beams, and the resistance to bending losses. This fiber comprises 90 holes arranged in a triangular period array having 5 rings or rows.

The ratio Φₕₒₗₑ/Λₕₒₗₑ between the diameter Φₕₒₗₑ and the pitch Λₕₒₗₑ is 0.4. This value ensures stable single-mode behavior of the optical fiber and a cut-off wavelength λ_{c} less than the pump wavelength 960 nm.

The diameter Φ_{doping} (or the diameter 2r₁ of the core 11) has a maximum value that makes it possible to preserve the constraints applying to the ratio Φₕₒₗₑ/Λ_{hole,} notably during fabrication of the optical fiber (i.e. considering the thickness of the walls of the capillary tubes).

The optical fibers I and II have the same erbium concentration. However, by virtue of its characteristics, the optical fiber II contains less radiation-sensitive dopants than the optical fiber I. Doping with rare earths via nanoparticles makes it possible to forgo the use of aluminum; the holes 10 in the optical cladding make it possible to forgo the use of germanium. Thus the optical fiber II contains no radiation-sensitive dopants other than erbium.

Furthermore, the holes 10 facilitate the achievement of a higher amplification gain per unit length than a comparative optical fiber, thereby making it possible to improve the overlap between the signal and the area 12 doped with erbium and thus to reduce the exposed length of optical fiber. Thus, the optical fiber II of the present invention has a in increased amplification gain per unit length. The optical fiber II of the present invention therefore has reduced radiation sensitivity compared with the prior art optical fiber 1. The attenuation per meter α₁₅₃₀[Er] of the optical fiber II at the wavelength 1530 nm caused by the incorporation of the erbium is greater than that of the optical fiber I because of the improved overlap between the doped area and the optical signal at the wavelength concerned.

Table 2 (below) gives examples of optical fibers III and IV usable in a wide-band application such as a wavelength-division multiplex application. The aluminum concentration is higher than in the examples of optical fiber I and II in order to increase the bandwidth.

**Table 2**

| **Fiber III** | | **Fiber IV** | |
|---|---|---|---|
| λ_{c} | 960 nm | λ_{c} | < 960 nm |
| 2r₁ | 3 2 µm | Pitch Λₕₒₗₑ | 6 0 µm |
| Δn | 19.10⁻³ | Φₕₒₗₑ | 2.4 µm |
| | | Φₕₒₗₑ/Λₕₒₗₑ | 0 4 |
| [Er] | 2 0×10²⁴ ions/m³ | [Er] | 2 0×10²⁴ ions/m³ |
| | | 2r₁ | 6 0 µm |
| ₁₅₃₀[Er] | 4 dB m⁻¹ | α₁₅₃₀[Er] | 6 1 dB m⁻¹ |
| | | Δn _{doping} | 10×10⁻³ |
| [Al] | ~ 7 wt% | [Al] | ~ 3 wt% |
| [F] | ~ 1 0 wt% | [F] | 0 |
| [Ge] | ~ 0 5 wt% | [Ge] | 0 |
| Γ_{980 nm} | 083 | Γ_{980 nm} | 0 92 |
| Γ_{1550 nm} | 0 55 | Γ_{1550 nm} | 0 84 |
| Optical fiber length | 23 m | Optical fiber length | 15 m |

Table 2 shows the same parameters as Table 1. For each optical fiber, Table 2 also gives the optical fiber's fluorine concentration [F].

In the optical fiber III, most of the index difference between the central core and the optical cladding is produced essentially by the aluminum inserted to prevent aggregation of the rare earths. That said, some of the index difference is produced by complementary codoping of the central core with germanium and doping of the cladding with fluorine.

In the optical fiber IV, the nanoparticles consist of an alumina matrix containing erbium. The alumina induces an index difference Δn_{doping}. The characteristics of the pitch Λₕₒₗₑ between the holes, the ratio Φₕₒₗₑ/Λₕₒₗₑ between the diameter Φₕₒₗₑ and the pitch Λₕₒₗₑ, and the diameter Φ_{doping} are identical to those of the optical fiber II. The fiber has 90 holes arranges in a triangular periodic array having five rings or rows.

The optical fibers III and IV have the same erbium concentration. However, by virtue of its characteristics, the optical fiber IV contains fewer radiation-sensitive dopants than does the optical fiber III. Doping with rare earths via nanoparticles makes it possible to reduce the quantity of alumina necessary to obtain a large bandwidth. The holes 10 in the optical cladding also make it possible to eliminate the fluorine and the germanium that are typically necessary to obtain guidance properties. Thus, the optical fiber IV contains fewer radiation-sensitive dopants than does the optical fiber III. The holes 10 of the optical cladding also make it possible to reduce the length of optical fiber. Thus the optical fiber IV of the invention can achieve a length exposed to radiation less than that of the optical fiber III. The optical fiber IV of the present invention therefore has a reduced radiation-sensitivity relative to the prior art optical fiber III. The attenuation per meter α₁₅₃₀[Er] of the optical fiber IV measured at the wavelength 1530 nm and caused by incorporating erbium is greater than that of the optical fiber III because of the improved overlap between the doped area and the optical signal at the wavelength concerned.

The present invention also relates to an optical amplifier including at least one portion of the optical fiber according to the present invention and using a pump power in the range 150 mW to 1.5 W. In one embodiment, the amplifier has a bandwidth from 28 nm to 32 nm in the C band (from 1530 nm to 1560 nm).

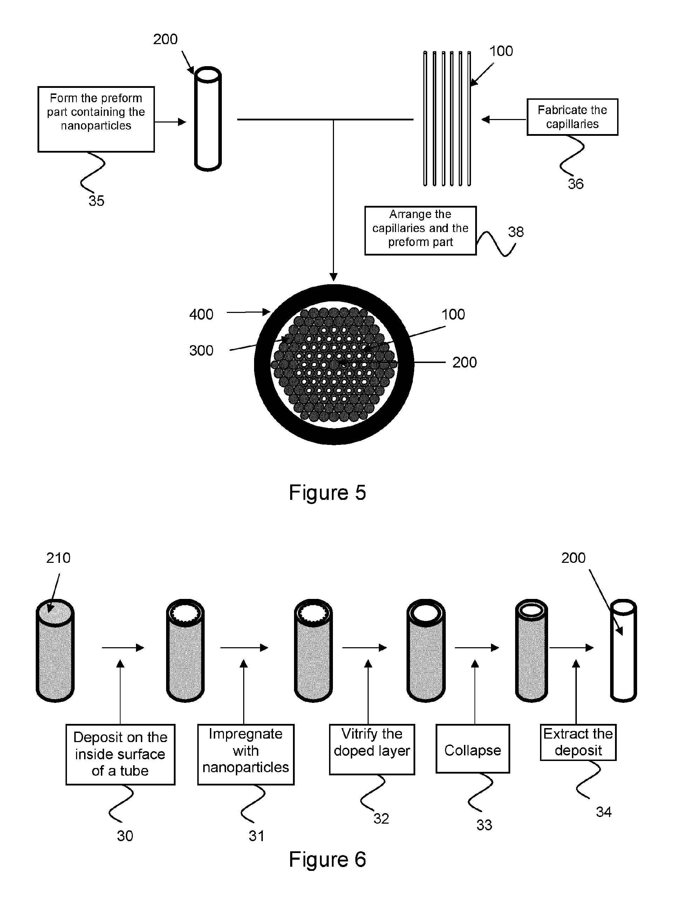

The present invention further relates to a method of fabricating a primary optical preform as described above. The method is explained with reference to Figures 5 to 7.

As Figure 5 shows, the method includes a step 35 of forming a preform core 200 of the preform containing nanoparticles doped with rare earths. This preform core 200 contributes to forming the optical fiber's central core 11 after drawing the preform. For example, the weight concentration in rare earths in this core 200 of the preform is in the range 200 ppm to 1000 ppm and the concentration of the matrix of nanoparticles is in the range 0.5 wt to 5 wt%, such as in the range 1.5 wt to 4 wt%.

The preform core 200 has a chlorine weight concentration of less than 1000 ppm. The core 200 furthermore contains no other chemical elements detectable by standard chemical analysis means. The plasma torch or inductively coupled plasma (ICP) is one example of a chemical analysis process. For example, the core 200 contains no other chemical elements having a weight concentration greater than one part per billion. Minimizing the quantity of chlorine and other chemical elements in the core 200 reduces the resistance to radiation of the optical fiber obtained after drawing.

The method then includes a step 36 of fabricating capillaries 100. These capillaries 100 define the holes 10 of the optical fiber obtained after drawing the preform.

There follows a step 38 in which the capillaries 100 are arranged in bundles of capillaries with the core 200 of the preform at the center of the bundle. Thus the preform comprises elements which, after drawing, respectively constitute the holes 10 and the central core 11 of the optical fiber.

The method makes it possible to obtain a preform that, after drawing, constitutes an optical fiber with a central core 11 containing nanoparticles doped with rare earths and a holey cladding. The method of the present invention makes it possible to obtain a preform of a radiation-resistant optical fiber having optimum amplification performance.

The preform then undergoes the standard steps of fabricating a photonic crystal optical fiber. For example, the combination of the core 200 and the capillaries 100 is completed by rods 300 and cladding 400 forming the outer cladding after drawing.

In a first embodiment, the capillaries 100 have a chlorine weight concentration of less than 500 ppm, preferably less than 100 ppm. The capillaries 100 moreover contain no other chemical elements detectable by standard chemical analysis techniques, such as the plasma torch. For example, the capillaries 100 contain no other chemical elements having a weight concentration greater than one part per billion. In other words, in the capillaries 100 the weight concentration in chemical elements other than chlorine is less than one part per billion. Thus, the capillaries 100 contain a limited quantity of radiation-sensitive chemical elements that would attenuate the signal transmitted by the central core 11 of the optical fiber obtained after drawing. For example, the capillaries 100 are pure silica.

In a second embodiment shown in Figure 6, the step 35 includes a step 30 of effecting a porous deposit on the inside surface of a tube 210. The porous deposit, which conforms to this inside surface, is therefore of tubular shape. For example, the porous deposit is made of pure silica. For example, the deposit is obtained using a modified chemical vapor deposition (MCVD) phase.

In this embodiment, the step 35 then includes a step 31 of impregnating the porous deposit with a suspension of nanoparticles. These nanoparticles are doped with rare earths.

In this embodiment, the step 35 then includes a step 32 of vitrifying the porous deposit at a high temperature, for example at a temperature of 2000°C.

In this embodiment, the step 35 then includes a step 33 of collapsing the combination of the tube 210 and the porous deposit. As noted, the porous deposit is initially of tubular shape. During the step 33, the porous deposit is collapsed. Thus after this step 33 the porous deposit no longer has a tubular shape but assumes a solid cylindrical shape.

In this same embodiment, the step 35 then includes a step 34 of extracting the porous deposit. In other words, the tube 210 is removed. Consequently, the tube 210 is not present in the optical fiber obtained after drawing the preform. Thus, the content of impurities of the tube 210 does not adversely affect the optical characteristics of the optical fiber after drawing. By way of non-limiting example, the tube 210 may be removed by evaporation, machining or etching, or by a combination of these three techniques. The porous deposit extracted from the tube 210 therefore constitutes the core 200 of the preform comprising the nanoparticles doped with rare earths. As noted, the core 200 of the preform contributes to forming the central core 11 of the optical fiber after drawing.

In a third embodiment, the step 35 comprises a step of forming a rod containing nanoparticles doped with rare earths. The rod is for example in the shape of a solid cylinder. The rod is based on pure silica. The rod is produced, for example, via sol-gel process known in the art.

In this embodiment, the step 35 then includes a step of vitrification at a temperature of 1000 °C followed by a step of collapsing the rod.

In this embodiment, the rod thus constitutes the core 200 of the preform comprising nanoparticles doped with rare earths. As noted, the core 200 of the preform contributes to forming the central core 11 of the optical fiber after drawing.

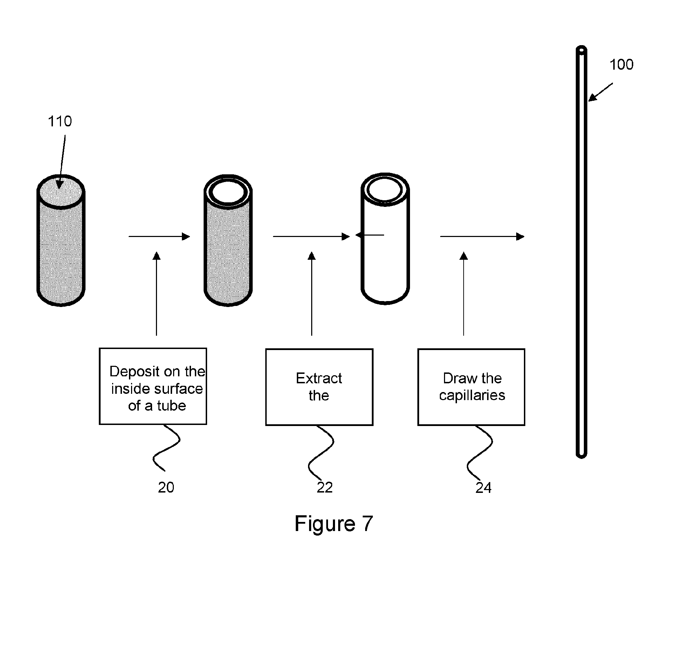

In another embodiment, the step 36 of fabricating the capillaries 100 includes the additional steps described below with reference to Figure 7.

The step 36 of fabricating the capillaries 100 includes a step 20 of effecting a deposit on the inside surface of a tube 110. The deposit is produced, for example, using a plasma-activated chemical vapor deposition (PCVD) technique.

The step 36 of fabricating the capillaries 100 then includes a step 22 of extracting the tubular deposit, i.e. removing the tube 110 to retain only the deposit. By way of non-limiting example, the tube 110 is removed by machining or etching or a combination of these two methods.

There follows the drawing of the capillaries 100 (step 24) from the tubular deposit. The tube 110 is not present in the capillaries 100 obtained. Thus the level of impurities of the tube 110 does not adversely affect the optical characteristics of the optical fiber after drawing.

In a method of the first and fourth embodiments, the deposit on the inside surface of the tube 110 has a chlorine weight concentration of less than 500 ppm, preferably less than 100 ppm. The deposit further contains no other chemical elements detectable by standard chemical analysis techniques, such as via the plasma torch. For example, the deposit contains no other chemical elements having a weight concentration greater than one part per billion. Minimizing the quantity of chlorine and other chemical elements in the deposit improves the radiation-resistance of the optical fiber obtained after drawing.

In a fifth embodiment, the step 36 of fabricating the capillaries 100 includes the step 20 of effecting a deposit on the inside surface of a tube 110 as described above.

In this embodiment, the step 36 then includes the drawing of the capillaries 100 (step 24) from the combination consisting of the tube 110 and the tubular deposit. In this embodiment the tube 110 is present in the capillaries 100 obtained. This simplifies the method of fabricating the capillaries 100.

In a method of the first and fifth embodiments, the tube 110 and the deposit on the inside surface of the tube 110 have a chlorine weight concentration of less than 500 ppm, preferably less than 100 ppm. The tube 110 and the deposit furthermore contain no other chemical elements detectable by standard chemical analysis techniques such as the plasma torch. For example, the tube 110 and the deposit contain no other chemical elements having a weight concentration greater than one part per billion. Minimizing the quantity of chlorine and other chemical elements in the tube 110 and the deposit improves the resistance to radiation of the optical fiber obtained after drawing.

The nanoparticles are produced by chemical or physical synthesis, for example. The nanoparticles are advantageously produced by chemical synthesis, which encourages the formation of thermodynamically stable stoichiometric structures.

A standard chemical method may be used for chemical synthesis of the nanoparticles in a controlled pH aqueous solution by co-precipitation of precursors of alumina salts (when the nanoparticle matrix is in alumina) and rare earth salts. For example, the precursors of alumina are inorganic salts such as nitrate or chloride and the precursors of erbium, ytterbium and thulium are organic salts such as acetyl acetonate or acetate. For example, the atomic ratio of the alumina salts and rare earth salts precursors is in the range 10 to 500, even in the range 50 to 350, in order to obtain a concentration of the rare earths in each nanoparticle that is in the range 0.5 wt% to 3 wt%, even in the range 0.75 wt% to 1.5 wt% depending on the target applications and the rare earths chosen. In one example, the atomic ratio of the alumina salt precursors to rare earth salt precursors is even in the range 50 to 200.

In one particular embodiment, the nanoparticle matrix is of alumina, the rare earth is erbium, and the atomic ratio of the alumina to the erbium is in the range 10 to 500, even in the range 50 to 350, such as hin the range 50 to 200.

The nanoparticles are then washed and dispersed in an aqueous or alcohol-based solution with a nanoparticle concentration in the range 10¹⁶ to 10¹⁸ per cm³ depending on the size of the nanoparticles. For example, the nanoparticles have a substantially spherical shape and a diameter in the range 5 nm to 25 nm (i.e between 10 and 20 nanometer). A tolerance of 20% is acceptable for the characteristics of the nanoparticles. For example, the nanoparticles are dispersed in the aqueous or alcohol-based solution with a nanoparticle concentration greater than or equal to 10¹⁷ per cm³ for nanoparticles of 5 nm diameter and greater than or equal to 10¹⁶ per cm³ for nanoparticles of 10 nm diameter.

In general, at least 80 percent (e.g., at least 85 percent) of the nanoparticles - and typically 90 percent (e.g., at least 95 percent) of the nanoparticles - exhibit the nominal nanoparticle characteristics (e.g., shapes, dimensions, and constituent concentrations).

For the matrix of each nanoparticle to be present in the finished optical fiber and to be able to constitute a physical barrier between the rare earths, it is important for each nanparticle to withstand the optical fiber fabrication conditions (temperatures and stresses). For example, a particular embodiment of the method of the present invention comprises a step of thermal densification of the nanoparticles following their incorporation in the porous deposit 210 by impregnation and before vitrification of the deposit. The deposit 210 undergoes a heat treatment at a temperature greater than 1000°C for at least one hour to reinforce the structure of the nanoparticles.

## Claims

1. An optical fiber comprising, from the center toward the periphery:
• a central core (11) adapted to transmit and to amplify an optical signal, the central core (11) consisting of a core matrix comprising nanoparticles, the nanoparticles being formed of a nanoparticle matrix comprising dopants from the group of rare earths ions;
• an optical cladding surrounding the central core (11) adapted to confine the optical signal transmitted by the central core (11), the optical cladding having a plurality of holes (10) that extend along the length of the optical fiber, the holes (10) being separated by a pitch (Λₕₒₗₑ); and
• an outer cladding.

2. The optical fiber according to claim 1, wherein the optical cladding has a chlorine weight concentration of less than 500 ppm, preferably less than 100 ppm and contains no other impurities having a weight concentration greater than one part per billion.

3. The optical fiber according to either preceding claim, wherein the optical cladding and/or the core matrix (11) is made of pure silica.

4. The optical fiber according to any preceding claim, wherein the holes (10) and the core (11) have only symmetries of rotation of order π about the center of the optical fiber, preferably the pitch (Λₕₒₗₑ) is in the range 2 µm to 10 µm and preferably i) the holes (10) have a cross-section that is substantially circular; and ii) each hole (10) has a diameter (Φₕₒₗₑ) such that the ratio of the diameter (Φₕₒₗₑ) to the pitch (Λₕₒₗₑ) is in the range 0.3 to 0.9.

5. The optical fiber according to any preceding claim, wherein the central core (11) has a weight concentration in dopants from the rare earths group in the range 200 ppm to 1000 ppm and a nanoparticle matrix concentration in the range 0.5 wt% to 5 wt%.

6. The optical fiber according to any preceding claim, wherein the nanoparticles present an atomic ratio of the nanoparticle matrix to the dopants from the rare earths group in the range 10 to 500, preferably in the range 50 to 350, and preferably the nanoparticle matrix is in a material selected from alumina, silica, or a combination thereof.

7. The optical fiber according to any preceding claim, wherein the dopants from the rare earths group are chosen from erbium, ytterbium, thulium, or a combination thereof.

8. An optical amplifier including at least one portion of optical fiber according to any preceding claim and using a pump power in the range 150 mW to 1.5 W and optionally having a bandwidth in the range 25 nm to 32 nm in the C band (from 1530 nm to 1560 nm).

9. The optical fiber laser including at least one portion of optical fiber according to any one of claims 1 to 8.

10. A method of fabricating an optical fiber primary preform, including steps consisting in:
• forming (35) a part (200) of the preform including nanoparticles doped with elements from the rare earths group, said part (200) of the preform contributing to forming the central core (11) of the optical fiber;
• fabricating (36) a plurality of capillaries (100); and
• arranging (38) the capillaries (100) in a bundle of capillaries including said part (200) of the preform at its center.

11. The method according to claim 10, wherein said part (200) of the preform contributing to forming the central core (11) of the optical fiber is produced in a material based on pure silica, optionally wherein the capillaries (100) are in pure silica.

12. The method according to claim 10 or claim 11, wherein the capillaries (100) have a chlorine weight concentration of less than 500 ppm, preferably less than 100 ppm and contain no other impurities having a weight concentration greater than one part per billion.

13. The method according to any one of claims 10 to 12, wherein the forming step (35) includes steps of:
• effecting (30) a porous deposit on the inside surface of a tube (210), said deposit having a tubular shape and preferably said the deposition step (30) being performed via a modified chemical vapor deposition (MCVD) technique;
• impregnating (31) said porous deposit with a suspension of nanoparticles doped with elements from the rare earths group;
• vitrifying (32) said impregnated deposit;
• collapsing (33) the combination consisting of the tube (210) and the deposit; and
• extracting (34) said deposit, said deposit constituting said part (200) of the preform contributing to forming the central core (11) of the optical fiber.

14. The method according to any one of claims 10 to 12, wherein the forming step (35) includes steps of:
• forming a rod comprising nanoparticles doped with elements from the rare earths group, preferably said rod being produced via a sol-gel process.;
• vitrifying the rod; and
• collapsing the rod, said rod constituting said part (200) of the preform contributing to forming the central core (11) of the optical fiber.

15. A method according to any one of claims 10 to 14, wherein the step (36) of fabricating the plurality of capillaries (100) includes steps of:
• effecting (20) a deposit on the inside surface of a tube (110), said deposit having a tubular shape, said effecting (20) preferably being carried out via a plasma chemical vapor deposition (PCVD) technique;
• extracting (22) the tubular deposit; and
• drawling (24) the capillaries (100) from the tubular deposit.

16. A method according to any one of claims 10 to 14, wherein the step (36) of fabricating the plurality of capillaries (100) includes steps of:
• effecting (20) a deposit on the inside surface of a tube (110), said deposit having a tubular shape; said effecting (20) preferably being carried out via a plasma chemical vapor deposition (PCVD) technique; and
• drawing (24) the capillaries (100) from the tube (110) having the deposit on its inside surface.

17. A method according to any one of claims 10 to 16, wherein the concentration of nanoparticles in the part (200) of the preform is in the range 10¹⁶/cm³ to 10¹⁸/cm³ and preferably wherein the nanoparticles have a substantially spherical shape and a diameter in the range 5 nm to 25 nm.
